# EUROPÄISCHE PATENTSCHRIFT

(11) **EP 2 955 371 B1**
(45) Veröffentlichungstag und Bekanntmachung des Hinweises auf die Patenterteilung: **20.02.2019**
(21) Anmeldenummer: 15170479.8
(22) Anmeldetag: 03.06.2015
(51) Int. Cl.: F03D 7/02

(54) **Azimutbremseinrichtung für Windenergieanlagen**
Azimuth braking device for wind turbines
Dispositif de frein en azimut pour éoliennes

(30) Priorität: 13.06.2014 DE 102014008404
(43) Veröffentlichungstag der Anmeldung: 16.12.2015
(73) Patentinhaber: Schunk Carbon Technology GmbH, 4822 Bad Goisern (AT)
(72) Erfinder: HUBER, Florian, Dipl.-Ing. Dr., 4820 Bad Ischl (AT); REISER, Klaus, 4820 Bad Ischl (AT); SCHEUTZ, Klaus, 4822 Bad Goisern (AT); HÖLL, Klaus, Dipl.-Ing., 4820 Bad Ischl (AT); GRATZER, Anton, 4820 Bad Ischl (AT)
(74) Vertreter: advotec.

(56) Entgegenhaltungen:
- DE-U1-202010 014 847
- US-A1- 2008 011 559
- US-A1- 2011 171 022

## Beschreibung

Die vorliegende Erfindung betrifft ein Verfahren zum Betrieb einer Azimutbremseinrichtung an einer einen Turm und eine gegenüber dem Turm azimutal verstellbare Gondel aufweisenden Windenergieanlage, wobei die Azimutbremseinrichtung eine senkrecht zur Drehachse der Gondel angeordnete Bremsscheibe mit mehreren am Umfang der Bremsscheibe verteilt angeordneten Bremssätteln umfasst, die jeweils mindestens zwei Bremsbeläge aufweisen, die zur Erzeugung einer Bremskraft gegen die Bremsscheibe bewegbar sind, wobei die Gesamtheit der Bremssättel Bremssättel A und Bremssättel B umfasst, wobei die Bremssättel A mit Bremsbelägen versehen sind, die einen von den Bremsbelägen der Bremssättel B abweichenden Reibwert aufweisen.

Windenergieanlagen mit einem Rotor mit horizontaler Achse weisen eine Azimutverstellung der Gondel auf, um den Rotor entsprechend der Windrichtung auszurichten und um bei Bedarf den Rotor aus dem Wind drehen zu können. Die zur Azimutverstellung erforderliche Einrichtung umfasst regelmäßig ein Lager zur drehbaren Lagerung der Gondel am Turm sowie einen Azimutantrieb zum Drehen der Gondel und eine Azimutbremseinrichtung, die die Drehbewegung der Gondel bremst und bei Bedarf die Drehstellung der Gondel fixiert.

Insbesondere beim Lösen des Bremskontakts zwischen den Bremsbelägen und der bei Windenergieanlagen in der Regel ringförmig ausgebildeten Bremsscheibe kommt es bei einer durch den Drehantrieb erzeugten Relativbewegung der Bremsscheibe gegenüber den Bremsbelägen zum so genannten "Ruckgleiten", das häufig auch als "Stick-Slip-Effekt" bezeichnet wird. Dieser Stick-Slip-Effekt induziert Schwingungen im System der Azimutbremseinrichtung, die zu nicht unbeträchtlicher Geräuschentwicklung führen; ein nicht unwesentlicher Grund für die häufig festzustellende mangelnde Akzeptanz von Windenergieanlagen in der Nähe von Siedlungen.

Aus der US 2011/0171022 A1 ist ein Verfahren zur Azimutverstellung bei einer Windenergieanlage bekannt, bei dem eine Azimutbremseinrichtung zum Einsatz kommt mit Bremssätteln, die Bremsbeläge unterschiedlichen Typs aufweisen, wobei sich beim Lösen der Azimutbremseinrichtung lediglich Bremsbeläge mit einem relativ niedrigen Reibwert im Eingriff mit der Bremsscheibe befinden, wohingegen Bremsbeläge mit einem relativ hohen Reibwert außer Eingriff mit den Bremsscheiben sind, sodass eine Bremswirkung lediglich zwischen den Reibbelägen mit dem relativ niedrigen Reibwert und der Bremsscheibe erzielt wird.

Vergleichbar beschreibt die DE 20 2010 014 847 U1 ein Verfahren zur Azimutverstellung bei einer Windenergieanlage, bei dem eine Azimutbremseinrichtung zum Einsatz kommt mit Bremssätteln, die mit Bremsbelägen bestückt sind, welche einen unterschiedlichen Reibwert aufweisen. In der DE 20 2010 014 847 U1 wird vorgeschlagen, beim Lösen der Azimutbremseinrichtung lediglich die Bremsscheiben mit einem reduzierten Reibkoeffizienten mit einem Bremsdruck zu beaufschlagen und die Bremsscheiben mit dem höheren Reibungskoeffizienten drucklos zu schalten.

Der vorliegenden Erfindung liegt die Aufgabe zugrunde, beim Lösen einer Azimutbremseinrichtung eine Bremswirkung sowohl zwischen den Bremsbelägen mit relativ niedrigem Reibwert als auch zwischen den Bremsbelägen mit relativ hohem Reibwert und der Bremsscheibe zu ermöglichen, ohne dass aufgrund eines infolge des Eingriffs auftretenden Ruckgleitens eine übermäßige Schaltemission die Folge wäre.

Zur Lösung dieser Aufgabe weist die erfindungsgemäße Azimutbremseinrichtung die Merkmale des Anspruchs 1 sowie der Ansprüche 2 bis 4 auf.

Erfindungsgemäß erfolgt beim Lösen des Bremskontakts zwischen den Bremsbelägen der Bremssättel A und B eine Überlagerung der Schwingungen der jeweils aus einem Bremssattel A und einem vom Bremssattel A beaufschlagten Segment der Bremsscheibe und aus einem Bremssattel B und einem vom Bremssattel B beaufschlagten Segment der Bremsscheibe gebildeten einzelnen lokalen Schwingungssysteme.

Der Erfindung liegt die Idee zugrunde, durch eine uneinheitliche Ausbildung der Bremsbeläge der Bremssättel in den einzelnen lokalen Schwingungssystemen, die jeweils aus einem Bremssattel und dem durch den Bremssattel bzw. durch die Bremsbeläge des Bremssattels beaufschlagten Segment der Bremsscheibe gebildet sind, ein unterschiedliches Schwingungsverhalten bzw. eine unterschiedliche Frequenz der durch den Stick-Slip-Effekt verursachten Schwingungen der lokalen Schwingungssysteme zu bewirken. Im Ergebnis werden somit in Umfangsrichtung der Bremsscheibe in ihrem Schwingungsverhalten voneinander abweichende Schwingungssysteme ausgebildet mit einer voneinander abweichenden Frequenz.

In entsprechenden Versuchen hat sich herausgestellt, dass bereits die Verwendung von zwei hinsichtlich ihrer Reibwerte unterschiedlichen Bremsbelägen in den Bremssätteln, also die Verwendung eines Bremsbelages erster Art in einem oder mehreren Bremssätteln und die Verwendung eines Bremsbelages zweiter Art in einem oder mehreren anderen Bremssätteln, ausreichend sein kann, um durch die Überlagerung des aufgrund der unterschiedlichen Reibwerte der Bremsbeläge der ersten und der zweiten Art hinsichtlich ihres Reibwertes ein unterschiedliches Schwingungsverhalten der Schwingungssysteme und im Ergebnis eine Beeinflussung des resultierenden Schwingungsverhaltens bzw. der resultierenden Frequenz zu erzielen. Im Ergebnis sind somit Schallemissionen erreichbar, die in der Umgebung entsprechend ausgestatteter Windenergieanlagen als weniger störend empfunden werden.

Bei Bedarf ist natürlich auch möglich, mehr als zwei hinsichtlich ihrer Reibwerte unterschiedliche Bremsbeläge in den Bremssätteln zu verwenden, also die Verwendung eines Bremsbelages erster Art in einem oder mehreren Bremssätteln, die Verwendung eines Bremsbelages zweiter Art in einem oder mehreren anderen Bremssätteln und die Verwendung eines Bremsbelages dritter Art in einem oder mehreren weiteren Bremssätteln, u.s.w..

Eine erste erfindungsgemäße Ausgestaltung einer Azimutbremseinrichtung, die die Ausführung des Verfahrens ermöglicht, weist in Umfangsrichtung der Bremsscheibe benachbart aufeinanderfolgend jeweils einzelne Bremssättel A und Bremssättel B auf. Somit weisen in Umfangsrichtung der Bremsscheibe benachbarte Bremssättel unterschiedliche Reibwerte auf, wobei es bei dieser ersten Ausführungsform im Wesentlichen darauf ankommt, dass grundsätzlich unabhängig von ihrer jeweiligen Anordnung innerhalb der Gesamtanordnung einer Mehrzahl von Bremssätteln überhaupt zwei benachbarte Bremssättel vorhanden sind, die Bremsbeläge mit unterschiedlichen Reibwerten aufweisen.

Eine zweite erfindungsgemäße Ausgestaltung einer Azimutbremseinrichtung, die die Ausführung des Verfahrens ermöglicht, die insbesondere eine besonders exakte Feinabstimmung des Schwingungsverhaltens ermöglicht, weist zwischen zwei Bremssattelgruppen mit Bremssätteln A oder Bremssätteln B, die mit Bremsbelägen versehen sind, die übereinstimmende Reibwerte aufweisen, einen einzelnen Bremssattel A oder Bremssattel B auf, der Bremsbeläge mit einem von den übereinstimmenden Reibwerten abweichenden Reibwert aufweist.

Eine dritte erfindungsgemäße Ausgestaltung einer Azimutbremseinrichtung, die die Ausführung des Verfahrens ermöglicht, weist zwischen zwei Bremssattelgruppen mit Bremssätteln A oder Bremssätteln B, die mit Bremsbelägen versehen sind, die unterschiedliche Reibwerte aufweisen, einen einzelnen Bremssattel A oder Bremssattel B auf, der Bremsbeläge mit einem von den unterschiedlichen Reibwerten abweichenden Reibwert aufweist.

Nachfolgend werden bevorzugte Ausführungsbeispiele anhand der Zeichnung näher erläutert.

Es zeigen:
- **Fig. 1:**: Ein erstes Ausführungsbeispiel der Erfindung;
- **Fig. 2:**: einen Bremssattel in Schnittdarstellung;
- **Fig. 3:**: einen Bremsbelag in Draufsicht;
- **Fig. 4**: ein zweites Ausführungsbeispiel der Erfindung;
- **Fig. 5**: ein drittes Ausführungsbeispiel der Erfindung;
- **Fig. 6**: ein viertes Ausführungsbeispiel der Erfindung;
- **Fig. 7**: ein fünftes Ausführungsbeispiel der Erfindung;
- **Fig. 8**: ein sechstes Ausführungsbeispiel der Erfindung.

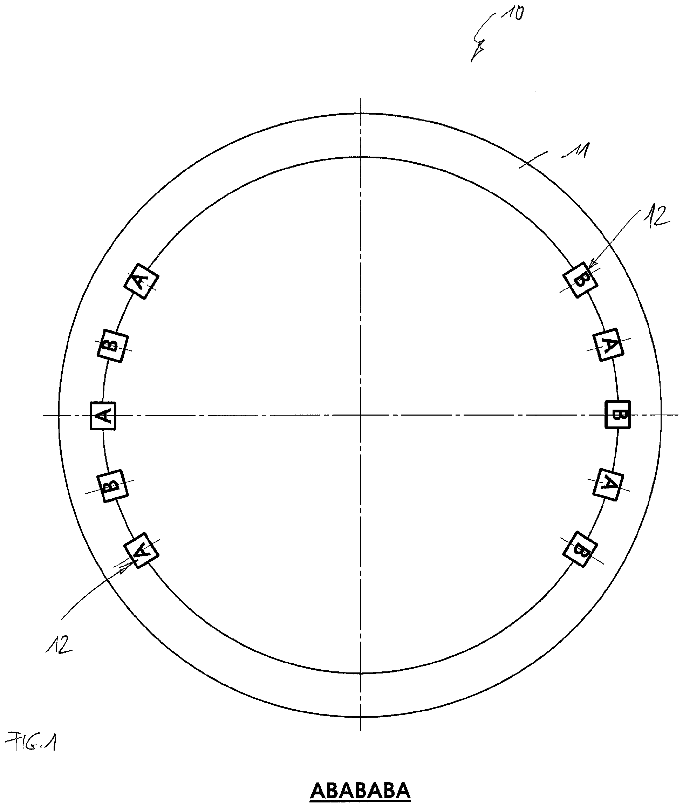

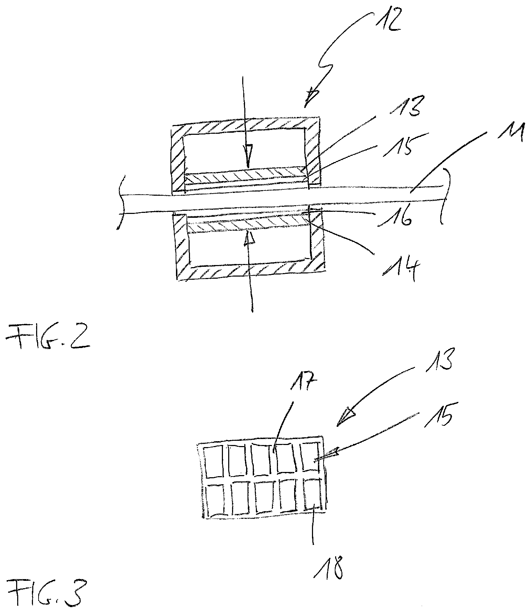

**Fig. 1** zeigt in einer schematischen Darstellung eine Azimutbremseinrichtung 10 mit einer ringförmig ausgebildeten Bremsscheibe 11 und einer Mehrzahl von am Umfang der Bremsscheibe 11 verteilt angeordneten Bremssätteln 12, die jeweils, wie in einer Schnittdarstellung eines Bremssattels 12 in **Fig. 2** dargestellt ist, mit zwei Bremsbelagträgern 13, 14 versehen sind, welche jeweils mit einem oberen Bremsbelag 15 und einem unteren Bremsbelag 16 belegt sind.

**Fig. 3** zeigt in Draufsicht den Bremsbelagträger 13, der im vorliegenden Fall übereinstimmend mit dem Bremsbelagträger 14 ausgebildet ist und den übereinstimmend mit dem Bremsbelag 16 ausgebildeten Bremsbelag 15 aufweist. Der Bremsbelag 15 ist im vorliegenden Fall durch Belagnuten 17 in Bremsbelagsegmente 18 übereinstimmender Größe unterteilt.

Die in **Fig. 1** sowie auch in den weiteren Figuren dargestellten Bremssättel 12 unterscheiden sich lediglich hinsichtlich der Ausbildung ihrer Bremsbeläge 15, 16, derart, dass die Bremssättel 12 zumindest teilweise Bremsbeläge 15, 16 mit unterschiedlichen Reibwerten aufweisen. Nachfolgend werden daher die Bremssättel 12 entsprechend der unterschiedlichen Ausbildung ihrer Bremsbeläge 15, 16 als Bremssattel 12 vom Typ A und Bremssattel 12 vom Typ B unterschieden und in den **Figuren 1** und **4 bis 8** entsprechend gekennzeichnet. Bremssattel A bezeichnet dementsprechend einen Bremssattel 12, dessen Bremsbelagträger 13, 14 mit einem übereinstimmenden Bremsbelag 15, 16 vom Typ A belegt sind, und Bremssattel B bezeichnet entsprechend einen Bremssattel 12, dessen Bremsbelagträger 13, 14 übereinstimmend mit einem Bremsbelag 15, 16 vom Typ B belegt sind. Im Falle des vorliegenden Ausführungsbeispiels weist ein Bremsbelag vom Typ A einen Reibwert µ = 0,45 und ein Bremsbelag vom Typ B einen Reibwert µ = 0,10 auf.

**Fig. 1** zeigt demnach die Azimutbremseinrichtung 10, welche eine alternierende Anordnung von Bremssätteln A und Bremssätteln B aufweist. Insbesondere weisen bei dem in **Fig. 1** dargestellten Ausführungsbeispiel in Umfangsrichtung der Bremsscheibe 11 benachbarte Bremssättel 12 Bremsbeläge 15, 16 mit unterschiedlichem Reibwert µ auf, da der Bremssattel A einen unteren und oberen Bremsbelag 15, 16 vom Typ A mit einem Reibwert µ = 0,45 aufweist und der Bremssattel B einen unteren und oberen Bremsbelag 15, 16 vom Typ B aufweist. Die Azimutbremseinrichtung 10 weist somit eine Bremssattelfolge ABABABABAB auf.

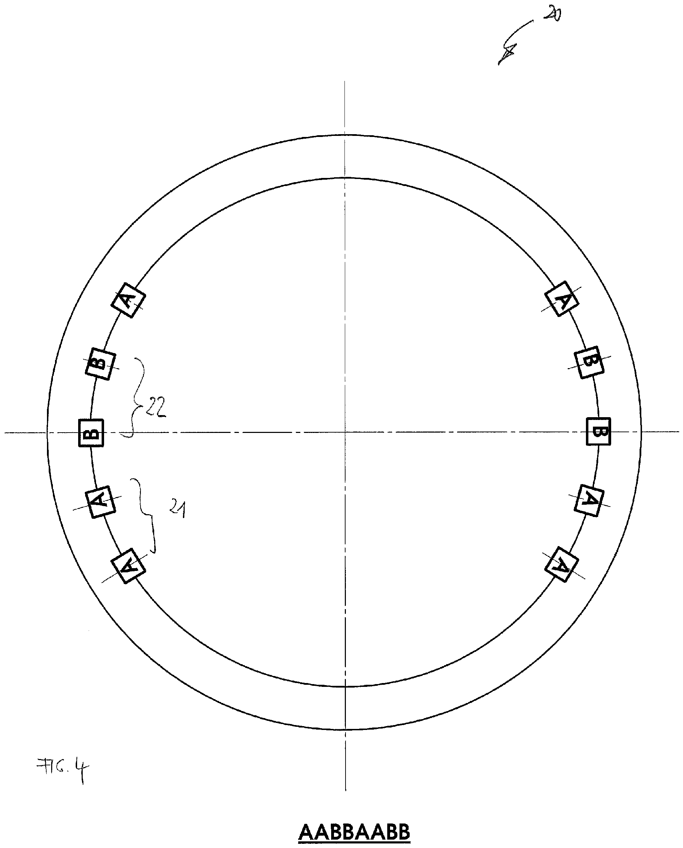

**Fig. 4** zeigt eine Azimutbremseinrichtung 20 mit einer Anordnung von Bremssätteln 12, die in Umfangsrichtung der Bremsscheibe 11 benachbart Bremssattelgruppen 21, 22 mit jeweils mehreren Bremssätteln A und Bremssätteln Typ B aufweist, derart, dass die Bremssattel-Gruppe 21 zwei Bremssättel A und die Bremssattel-Gruppe 22 zwei Bremssättel B aufweist. Die Bremssattelgruppen 21, 22 sind alternierend angeordnet, so dass jeweils auf eine Bremssattelgruppe 21 benachbart in Umfangsrichtung folgend eine Bremssattelgruppe 22 angeordnet ist, auf die wiederum eine Bremssattelgruppe 21 folgt. Die Azimutbremseinrichtung 20 weist somit eine Bremssattelfolge AABBAABBAA auf

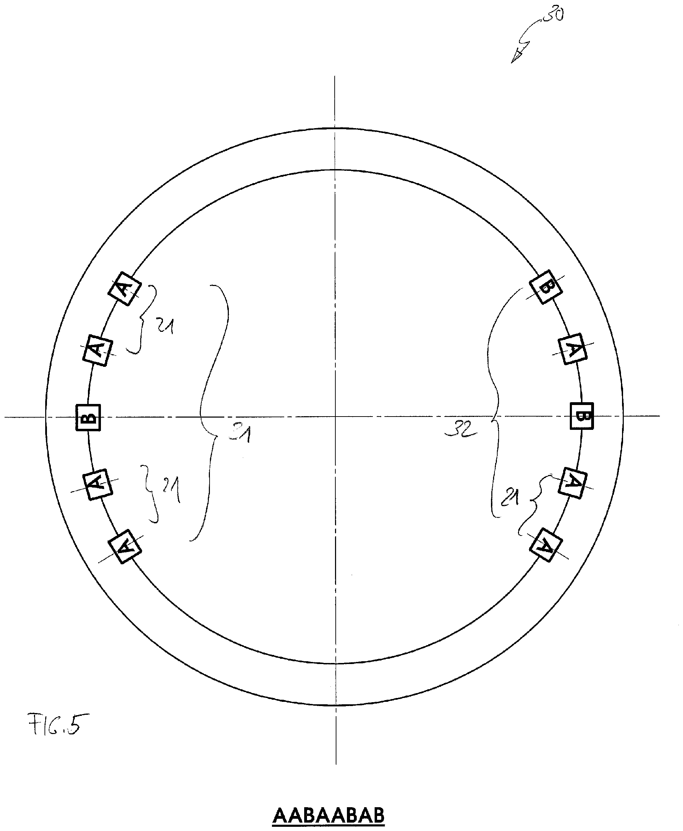

**Fig. 5** zeigt eine Azimutbremseinrichtung 30, die sowohl mehrere Bremssattelgruppen 21 mit jeweils zwei Bremssätteln A aufweist als auch zwischen den Bremssattelgruppen 21 angeordnete einzelne Bremssättel B und Bremssättel A. Insbesondere zeigt **Fig. 5**, dass die Azimutbremseinrichtung 30 in einer linken Bremssattelanordnung 31 zwischen zwei Bremssattelgruppen 21 mit Bremssättteln A einen einzelnen Bremssattel B aufweist und in einer rechten Bremssattelanordnung 32, die gegenüberliegend der linken Bremssattelanordnung 31 angeordnet ist eine Bremssattelgruppe 21 sowie einen einzelnen Bremssatte A der zwischen zwei einzeln angeordneten Bremssätteln B angeordnet ist. Die Azimutbremseinrichtung 30 weist somit eine Bremssattelfolge AABAABABAA auf

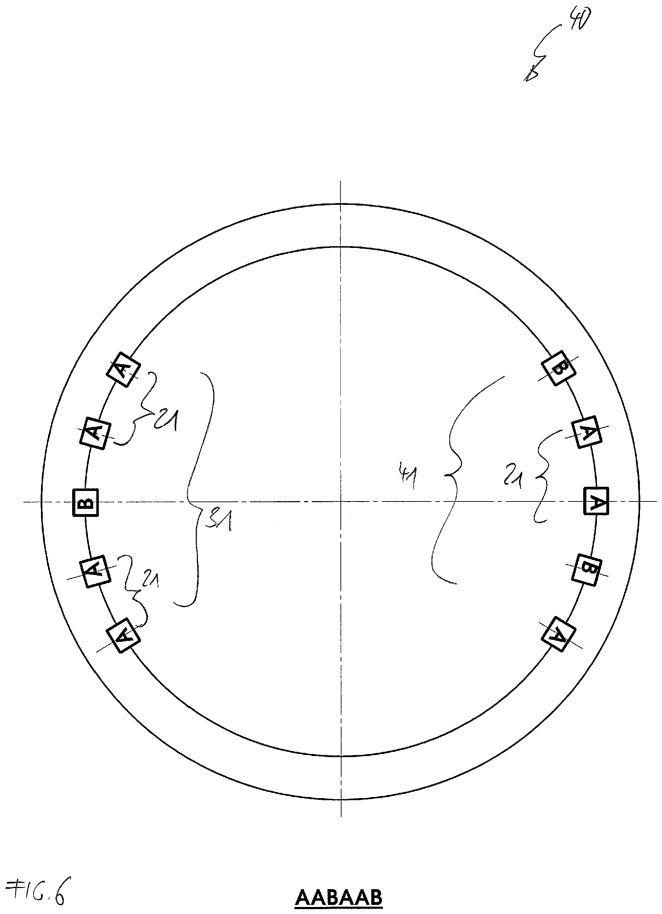

Eine Azimutbremseinrichtung 40, die in **Fig. 6** dargestellt ist, weist übereinstimmend mit der Azimutbremseinrichtung 30 eine linke Bremssattelanordnung 31 mit einem zwischen zwei Bremssattelgruppen 21 mit Bremssätteln A einzeln angeordneten Bremssattel B auf. Gegenüberliegend der linken Bremssattelanordnung 31 weist die Azimutbremseinrichtung 40 eine Bremssattelanordnung 41 auf, die zwischen zwei einzeln angeordneten Bremssätteln B eine Bremssattelgruppe 21 mit zwei Bremssätteln vom Typ A sowie einen weiteren einzeln angeordneten Bremssattel A aufweist. Die Azimutbremseinrichtung 40 weist demnach in Umfangsrichtung der Bremsscheibe 11 die Bremssattelfolge AABAABAABA auf.

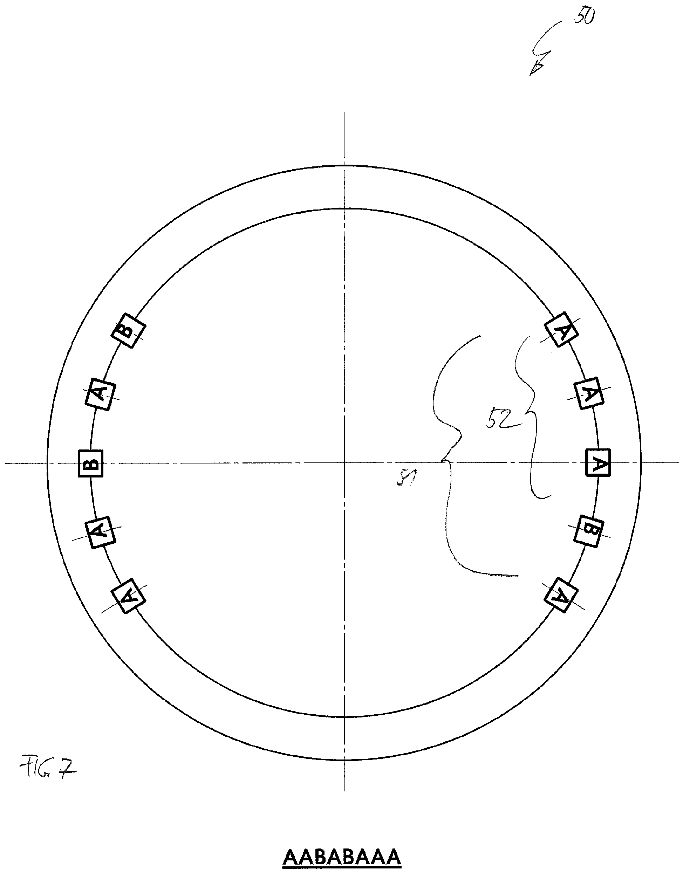

**Fig. 7** zeigt eine Azimutbremseinrichtung 50 mit einer Bremssattelfolge AABABAAABA, wobei eine rechte Bremssattelanordnung 51 eine Bremssattelgruppe 52 mit drei Bremssätteln A aufweist, der in Umfangsrichtung nachfolgend ein Bremssattel B und schließlich ein Bremssattel A nachgeordnet sind.

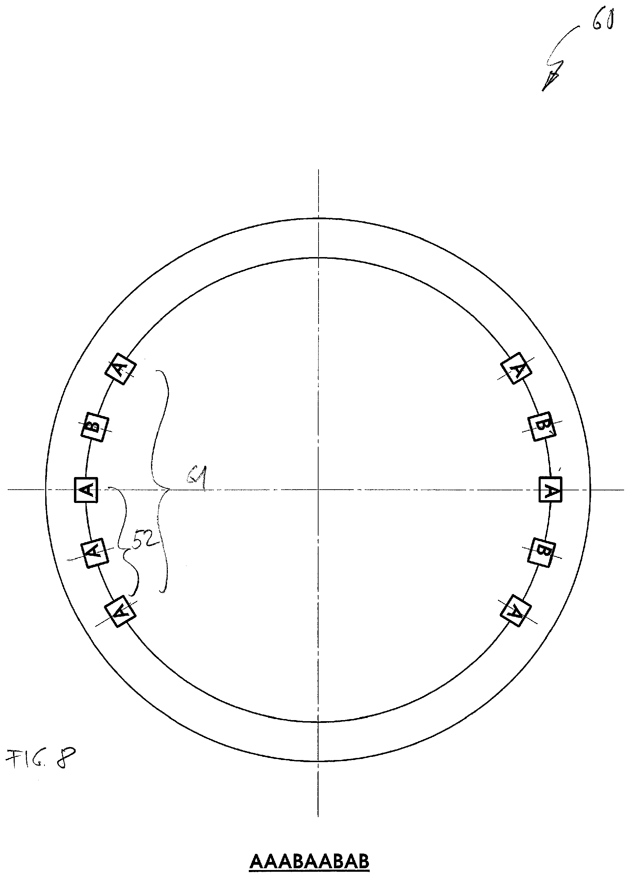

Die in **Fig. 8** dargestellte Azimutbremseinrichtung 60 weist eine Bremssattelfolge AAABAABABA auf, wobei eine linke Bremssattelanordnung 61 im vorliegenden Fall übereinstimmend mit der in **Fig. 7** dargestellten rechten Bremssattelanordnung 51 in Umfangsrichtung aufeinanderfolgend eine Bremssattelgruppe 52 mit drei Bremssätteln A und nachfolgend einen Bremssattel B und einen Bremssattel A aufweist.

## Patentansprüche

1. Verfahren zum Betrieb einer Azimutbremseinrichtung (10, 20, 30, 40, 20 50, 60) an einer einen Turm und eine gegenüber dem Turm azimutal verstellbare Gondel aufweisenden Windenergieanlage, wobei die Azimutbremseinrichtung eine senkrecht zur Drehachse der Gondel angeordnete Bremsscheibe (11) mit mehreren am Umfang der Bremsscheibe verteilt angeordneten Bremssätteln (12) aufweist, die jeweils mindestens zwei Bremsbeläge (15, 16) aufweisen, welche zur Erzeugung einer Bremskraft gegen die Bremsscheibe bewegbar sind, wobei die Gesamtheit der Bremssättel (12) Bremssättel A und Bremssättel B umfasst, wobei die Bremssättel A mit Bremsbelägen versehen sind, die einen von den Bremsbelägen der Bremssättel B abweichenden Reibwert aufweisen,
**dadurch gekennzeichnet,**
**dass** beim Lösen des Bremskontaktes zwischen den Bremsbelägen der Bremssättel A und B eine Überlagerung der Schwingungen der jeweils aus einem Bremssattel A und einem vom Bremssattel A beaufschlagten Segment der Bremsscheibe und aus einem Bremssattel B und einem vom Bremssattel B beaufschlagten Segment der Bremsscheibe gebildeten einzelnen lokalen Schwingungssysteme erfolgt.

2. Azimutbremseinrichtung umfassend Mittel zur Durchführung eines Verfahrens nach Anspruch 1,
**dadurch gekennzeichnet,**
**dass** in Umfangsrichtung der Bremsscheibe (11) benachbart aufeinanderfolgend jeweils einzelne Bremssättel A und Bremssättel B angeordnet sind.

3. Azimutbremseinrichtung umfassend Mittel zur Durchführung des Verfahrens nach Anspruch 1,
**dadurch gekennzeichnet,**
**dass** zwischen zwei Bremssattelgruppen (21, 22, 52) mit Bremssätteln A oder Bremssätteln B, die mit Bremsbelägen versehen sind, die übereinstimmende Reibwerte aufweisen, ein einzelner Bremssattel A oder Bremssattel B angeordnet ist, der Bremsbeläge mit einem von den übereinstimmenden Reibwerten abweichenden Reibwert aufweist.

4. Azimutbremseinrichtung umfassend Mittel zur Durchführung des Verfahrens nach Anspruch 1,
**dadurch gekennzeichnet,**
**dass** zwischen zwei Bremssattelgruppen (21, 22, 52) mit Bremssätteln A oder Bremssätteln B, die mit Bremsbelägen versehen sind, die unterschiedliche Reibwerte aufweisen, ein einzelner Bremssattel A oder Bremssattel B angeordnet ist, der Bremsbeläge mit einem von den unterschiedlichen Reibwerten abweichenden Reibwert aufweist.

## Claims

1. A method for operating a yaw brake device (10, 20, 30, 40, 50, 60) for a wind energy plant comprising a tower and a nacelle that can be azimuthally adjusted with respect to the tower, the yaw brake device comprising a brake disk (11) that is arranged perpendicular to the axis of rotation of the nacelle and has multiple brake calipers (12) that are distributed across the circumference of the brake disk, said brake calipers each having at least two brake pads (15, 16) that can be moved against the brake disk so as to generate a brake force, the total number of brake calipers (12) comprising brake calipers A and brake calipers B, the brake calipers A being provided with brake pads that have a different friction coefficient than the brake pads of the brake calipers B,
**characterized in that**
when the brake contact between the brake pads of the brake calipers A and B is released, a superposition of the vibrations of the individual local vibration systems each formed by a brake caliper A and a segment of the brake disk acted on by said brake caliper A and by a brake caliper B and a segment of the brake disk acted on by said brake caliper B occurs.

2. A yaw brake device comprising means for implementing a method according to claim 1,
**characterized in that**
individual brake calipers A and brake calipers B are each arranged adjacently one after another in the circumferential direction of the brake disk (11).

3. The yaw brake device comprising means for implementing the method according to claim 1,
**characterized in that**
between two groups of brake calipers (12, 22, 52) having brake calipers A or brake calipers B that are provided with brake pads having coinciding friction coefficients, an individual brake caliper A or brake caliper B is arranged that has brake pads having a friction coefficient that is different from the coinciding friction coefficients.

4. The yaw brake device comprising means for implementing the method according to claim 1,
**characterized in that**
between two groups of brake calipers (21, 22, 52) having brake calipers A or brake calipers B that are provided with brake pads having differing friction coefficients, an individual brake caliper A or brake caliper B is arranged that has brake pads having a friction coefficient that is different from the differing friction coefficients.

## Revendications

1. Procédé pour le fonctionnement d'un dispositif de frein d'azimut (10, 20, 30, 40, 50, 60) d'une éolienne comprenant un mât et une nacelle pouvant être ajustée de manière azimutale par rapport au mât, ledit dispositif de frein d'azimut comprenant un disque de freinage (11) disposé perpendiculairement à l'axe de rotation de la nacelle et ayant plusieurs étriers de frein (12) répartis sur la circonférence du disque de frein, lesdits étriers de frein (12) comprenant chacun au moins deux garnitures de frein (15, 16) qui peuvent être bougées contre le disque de freinage pour la génération d'une force de freinage, la totalité des étriers de frein (12) comprenant des étriers de frein A et des étriers de frein B, lesdits étriers de frein A étant fournis de garnitures de frein qui présentent un coefficient de frottement différant des garnitures de frein des étriers de frein (B),
**caractérisé en ce que**
lors du desserrage du contact de freinage entre les garnitures de frein des étriers de frein A et B, une superposition des vibrations des systèmes locaux de vibration séparés formés respectivement par un étrier de frein A et un segment du disque de frein sur lequel agit l'étrier de frein A et par un étrier de frein B et un segment du disque de frein sur lequel agit l'étrier de frein B s'effectue.

2. Dispositif de frein d'azimut comprenant des moyens pour l'exécution d'un procédé selon la revendication 1,
**caractérisé en ce que**
des étriers de freins A et des étriers de freins B séparés sont chacun disposés de manière adjacente et successive dans la direction circonférentielle du disque de frein (11).

3. Dispositif de frein d'azimut comprenant des moyens pour l'exécution du procédé selon la revendication 1,
**caractérisé en ce qu'**
entre deux groupes d'étriers de frein (21, 22, 52) comprenant des étriers de frein A ou des étriers de frein B qui sont fournis de garnitures de frein présentant des coefficients de frottement concordants, un étrier de frein A séparé ou un étrier de frein B séparé comprenant des garnitures de frein ayant un coefficient de frottement différant des coefficients de frottement concordants est disposé.

4. Dispositif de frein d'azimut comprenant des moyens pour l'exécution du procédé selon la revendication 1,
**caractérisé en ce qu'**
entre deux groupes d'étriers de frein (21, 22, 52) comprenant des étriers de frein A ou des étriers de frein B qui sont fournis de garnitures de frein présentant des coefficients de frottement différents, un étrier de frein A séparé ou un étrier de frein B séparé comprenant des garnitures de frein ayant un coefficient de frottement différant des coefficients de frottement différents est disposé.
